# EUROPEAN PATENT APPLICATION

(11) **EP 4 844 794 A1**
(43) Date of publication of application: **25.11.2026**
(21) Application number: 25178470.8
(22) Date of filing: 23.05.2025
(51) Int. Cl.: H01H 9/56, H02H 3/02

(54) **METHOD FOR OPERATING A CIRCUIT BREAKER AND SYSTEM COMPRISING A CIRCUIT BREAKER**

(71) Applicant: GE Vernova Technology GmbH, 5400 Baden (CH)
(72) Inventor: FANGET, Alain, Villeurbanne, 69100 Rhone (FR); AIT ABDEMALEK, Farid, Aix-les-Bains, 73100 Savoie (FR)
(74) Representative: Rüger Abel IP Legal Solutions GmbH

(57) **Abstract**

The invention relates to a method and system (10) for operating a circuit breaker (16) connected to a shunt compensated transmission line (11). The circuit breaker (16) can be switched between a non-conductive position (N) and a conductive position (C). With the circuit breaker (16) being in a non-conductive position (N), a request for (re-)closing the circuit breaker (16) can occur and in this case, the following method is carried out: an actual current (IA) flowing in the shunt (12) and a predicted current (IP) are determined. The predicted current (IP) is a current that flows in the shunt (12) under the assumption that the circuit breaker (16) establishes an electrical connection when switching into the conductive position (C). A circuit breaker voltage (UC) across the circuit breaker (16) and particularly the absolute value thereof defines a voltage envelope (ENV), a local minimum of which can be determined occurring at an envelope minimum point in time (tm). Prior to or following this envelope minimum point in time (tm), a closing point in time (tc) is determined that is as close as possible to the envelope minimum point in time (tm), wherein at the closing point in time (tc), the actual current (IA) and the predicted current (IP) are equal. The circuit breaker (16) can then be triggered so that it establishes an electrical connection at the closing point in time (tc).

## Description

The invention refers to a method for operating a circuit breaker which is connected to a shunt compensated transmission line. Such shunt compensated transmission lines are connected to ground via a shunt. The shunt provides an impedance that can comprise at least one of a capacitive component and a reactive component. The invention also refers to a system comprising a circuit breaker connected to a shunt compensated transmission line.

In general, switching inductive loads shall be carried out in a way that the current through the inductive load continues and is not forced to a different amount suddenly (i.e. steep current changes shall be avoided). Here, due to the impedance on the transmission line side and particularly the reactive component of a shunt connected to the transmission line, switching of the circuit breaker shall provide current amount continuity to avoid transient effects.

Electrical energy can be stored on the transmission line side due to the impedance, particularly in the shunt. This energy results in a current flow from the transmission line through the shunt to ground if the circuit breaker is switched into the non-conductive position.

Also, a shunt compensated transmission line can show a so-called *"current zero missing phenomenon".* When the circuit breaker has been switched into a non-conductive position to interrupt the current flow through the transmission line and is switched back into the conductive position, oscillation of the current can occur, due to the impedance on the transmission line side (capacitive and or reactive characteristic of the shunt and transmission line). This current can alternate around a DC current component. The DC current component, however, decays slowly so that the current is different from zero in a first time phase after the circuit breaker has been switched into a conductive position.

However, if during this first time phase it is necessary or advantageous to switch the circuit breaker back into the non-conductive position (i.e. reopen the circuit breaker), the problem occurs that the current flowing from the transmission line through the shunt to ground is different from zero, i.e. a current zero-crossing is missing and the interruption (switching the circuit breaker back into the non-conductive position) may fail. The transient effect occurs due to the impedance of the shunt and optionally also impedances of the transmission line and a load connected to the transmission line.

The *"current zero missing phenomenon"* is an issue and it is desired to eliminate this phenomenon as far as possible. Another issue to be considered is avoiding a large voltage difference over the circuit breaker when it is switched from the non-conductive into a conductive position.

It is an object of the present invention to provide a method and a system that avoids or reduces detrimental effects during a switching sequence when a circuit breaker is switched into a non-conductive position shortly after it has been switched into its conductive position.

This object is solved by means of a method according to claim 1 and a system according to claim 15.

According to the invention, a circuit breaker is connected with one connection side to a shunt compensated transmission line. The other connection side of the circuit breaker is particularly connected to a supply line providing an impressed supply voltage and/or supply current. The supply line may provide electrical power from a power plant, for example. The circuit breaker can be switched between a conductive position and a non-conductive position. In the non-conductive position, the supply line and the transmission line are electrically separated, whereas in the conductive position, an electrical connection is established between the supply line and the transmission line.

It should be noted that at least one of the contacts of the circuit breaker is a movable contact that can be moved between the conductive position and the non-conductive position of the circuit breaker relative to the respective other contact and relative to the housing of the circuit breaker. One of the contacts of the circuit breaker may be immovably arranged in the circuit breaker housing. It is also possible that both contacts are movable contacts. In general, the circuit breaker may be any suitable circuit breaker appropriate and known for interrupting and establishing an electrical connection between a supply line and a shunt compensated transmission and for managing/clearing faults occurring on the transmission line. For example, the circuit breaker may be configured as self-blast circuit breaker.

The transmission line is connected to ground by means of a shunt. The shunt has an impedance. The impedance can be a reactive impedance, a capacitive impedance or a combination of a reactive and capacitive impedance.

If the circuit breaker has been switched into the non-conductive position, the actual current flowing through the shunt is determined. The actual current can thereby be calculated using an actual voltage existing between the transmission line and ground. The actual voltage can be measured, for example. The electrical characteristics and particularly the impedance of the shunt is known, so that the actual current can be calculated considering the impedance and the actual voltage.

The method also comprises predicting a current flowing through the shunt under the assumption that the circuit breaker is switched back into the conductive position. This current can be denoted as predicted current. The predicted current can be determined by means of different processes, such as at least one of simulation, calculation, estimation, using an algorithm, a function, a lookup table, or the like. The determination of the predicted current can use the electrical characteristics of the shunt and the transmission line while considering actual electrical parameters on both connection sides of the circuit breaker. Preferably, a voltage measured on the supply line side can be used as a basis for determination of the predicted current.

Depending on the electrical characteristics of the shunt and the transmission line, the frequency of the actual voltage and/or the actual current can be different from the frequency of the supply voltage and/or the supply current in the supply line when the circuit breaker is in the non-conductive position.

The method also comprises determination of a voltage envelope. The voltage envelope is an envelope of a circuit breaker voltage across the circuit breaker while the circuit breaker is still in the non-conductive position. The circuit breaker voltage can be a beat. For example, the circuit breaker voltage can be calculated from the difference between a supply voltage in the supply line and the actual voltage in the transmission line. At least one point in time is determined where the voltage envelope has a local minimum. The voltage envelope particularly provides several points in time where a local minimum occurs. This at least one point in time can be denoted as envelope minimum point in time.

A point in time where the circuit breaker shall take its conductive position is subsequently determined and can be denoted as closing point in time. At this point in time a current may flow through the circuit breaker. This closing point in time is determined as a point in time at which the actual current flowing through the supply line and the shunt to ground and the predicted current are equal. This means at the closing point in time, the progress of the actual current and the progress of the predicted current cross one another. At this closing point in time, the circuit breaker voltage is equal or near the voltage envelope and preferably near a local minimum. This means that the circuit breaker voltage is different to zero and/or different from a local minimum of the voltage envelope at the closing point in time. However, the closing point in time is as close to the envelope minimum point in time as possible and preferably the first point in time before and/or after the envelope minimum point in time where the actual current and the predicted current are equal.

Finally, the circuit breaker is triggered so that it is switched to take the conductive position at the closing point in time. Thereby, a time delay between a trigger point in time and the closing point in time can be advantageously considered.

According to the invention the predicted current and the actual current are equal at the switching point in time of the circuit breaker in the conductive position. This avoids or at least remarkably reduces transient effects. Consequently, the *"current zero missing phenomenon"* is avoided or at least remarkably reduced. Thus, switching the circuit breaker again into the non-conductive position is made possible at a current of equal or at least near zero.

The invention provides an optimized trade-off between a low circuit breaker voltage at the switching point in time and the elimination or at least reduction of transient effects occurring at the switching point in time when the circuit breaker takes the conductive position.

It is preferred to determine a trigger point in time at which the circuit breaker is triggered so that at the closing point in time a current is allowed to flow over the circuit breaker and/or a low ohmic connection (e.g. short circuit) is established between the contacts of the circuit breaker. A time delay may occur between the trigger point in time and the closing point in time depending on the characteristic of the circuit breaker, for example, depending on at least one circuit breaker parameter. Such a circuit breaker parameter can comprise at least one of: a rate of decrease of dielectric strength (RDDS) and a switching speed between the contacts of the circuit breaker. The switching speed is characteristic for the duration needed from the triggering point in time to move the contacts of the circuit breaker into an electrically conducting position.

As a circuit breaker parameter, particularly the switching speed of the circuit breaker or the circuit breaker contacts from the non-conductive position into the conductive position are considered in the context of the present invention. This speed may be different from the speed of the circuit breaker or the circuit breaker contacts when moving from the conductive position into the non-conductive position.

The time delay of the circuit breaker for an actuation of the circuit breaker from the non-conductive position can therefore be determined based on the at least one circuit breaker parameter and advantageously in addition based on the circuit breaker voltage at the closing point in time. Particularly, the higher the circuit breaker voltage, the shorter the time delay, because an electrical arc is created earlier prior to the contacts reaching the (final/abutment) position, when the switching procedure has terminated in the conductive position of the circuit breaker. In other words, the higher the circuit breaker voltage, the longer the distance between the circuit breaker contacts when the electrical arc establishes therebetween.

If the available time between the current point in time and the next closing point in time is less than the time delay, a (second) closing point in time following the next (first) closing point in time can be used for switching the circuit breaker from the non-conductive into the conductive position. For this purpose, the envelope period can be used to calculate one or more possible closing points in time. From one closing point in time, additional closing points in time can be calculated by an integer multiple of the envelope period added to the first closing point in time. As already explained above, the envelope period is a beat period, which is the reciprocal of the beat frequency of the current breaker voltage.

For the method according to the invention, any characteristic and/or electrical parameter of at least one voltage and/or at least one current can be calculated. Such a parameter can comprise at least one of the following: an amplitude, a frequency, a phase (between two voltages, between two currents, between a current and a voltage), a damping factor of an alternating signal, a beat frequency, and a beat period.

It is preferred if the predicted current is determined based on a predicted voltage and the shunt impedance. The predicted voltage can in turn be determined based on the supply voltage, whereby the supply voltage may be measured or determined in any other appropriate manner. Thereby, the supply voltage can be used as predicted voltage, because in the conductive position the voltage applied to the transmission line at the circuit breaker is equal to the supply voltage applied to the supply line at the circuit breaker.

The present invention also relates to a system comprising a shunt compensated transmission line, a shunt connecting the transmission line to ground, a circuit breaker connected to the transmission line, and a control unit, which is configured to control the circuit breaker. As an option, at least one sensor can be provided for measurement of at least one of: the actual voltage, the actual current, the supply voltage, and the supply current. The at least one sensor value can be provided to the control unit as necessary or advantageous.

The system, and particularly the control unit, is configured to carry out any embodiment of the method as explained above.

Advantageous embodiments of the invention can be derived from the dependent claims, the description, and the drawing. In the following, preferred embodiments of the invention are explained in detail with reference to the attached drawing. The drawing shows:
Figure 1 a schematic block-diagram-like illustration of a system comprising a shunt compensated transmission line, a supply line, and a circuit breaker arranged between the supply line and the transmission line,
Figure 2 a schematic illustration of an actual current flowing in the transmission line during a time phase after switching the circuit breaker into a conductive position according to the prior art,
Figure 3 a schematic illustration of voltages and currents during the time phase illustrated in figure 2 in a section around an envelope minimum point in time,
Figure 4 a schematic block diagram illustrating the determination of a trigger point in time based on one or more parameters and
Figure 5 a beat of a circuit breaker voltage absolute value across the circuit breaker in the non-conductive position and the voltage envelope of the circuit breaker voltage in a schematic illustration.

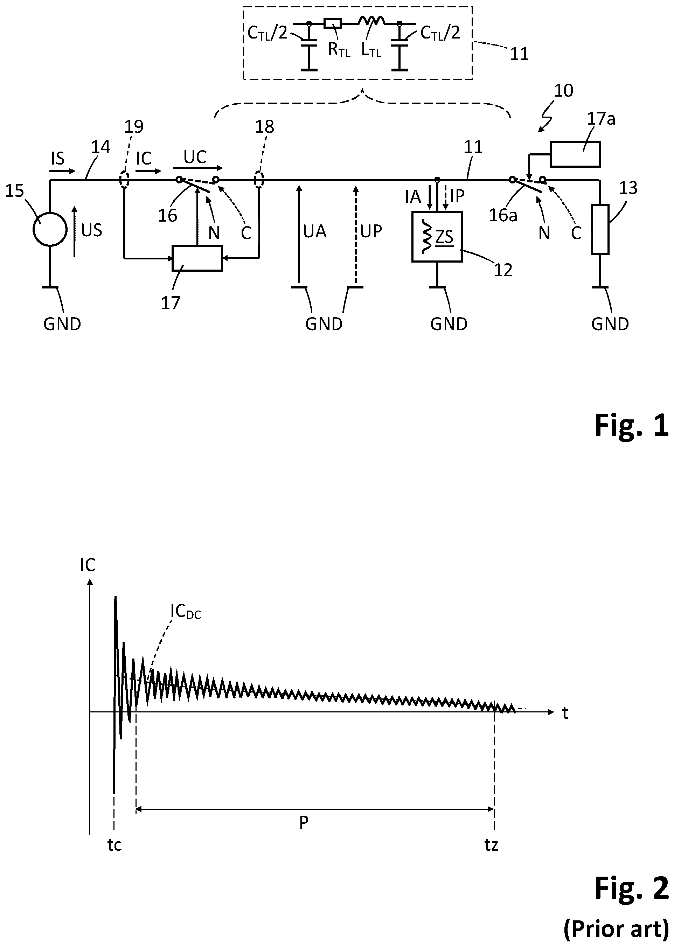

In figure 1 an embodiment of system 10 is illustrated by means of a block diagram. The system 10 comprises a shunt compensated transmission line 11, which is connected to ground GND via a shunt 12. The shunt 12 has a shunt impedance ZS. In the embodiment illustrated in figure 1, the shunt impedance ZS can comprise a reactive component. Additionally or alternatively, the shunt impedance ZS can also comprise a capacitive component.

As also depicted in figure 1, the transmission line 11 can be connected to a load 13 that can be any load 13 that is usually connected to a power transmission system. System 10 is therefore part of a power transmission system.

System 10 also comprises a supply line 14. The supply line may be connected to a power source 15 that can be a power plant, for example. The power source 15 can provide a supply voltage US applied to supply line 14 and/or a supply current IS flowing through supply line 14.

A circuit breaker 16 is arranged between supply line 14 and transmission line 11, denoted as first circuit breaker 16. The first circuit breaker 16 is configured to establish and interrupt an electrical connection between supply line 14 and transmission line 11. For this purpose, first circuit breaker 16 can be switched between a conductive position C establishing an electrical connection and a non-conductive position N interrupting the electrical connection between supply line 14 and transmission line 11. In the conductive position C a circuit breaker current IC can flow through the first circuit breaker 16. The voltage over the circuit breaker terminals of first circuit breaker 16 is denoted as circuit breaker voltage UC as shown in figure 1.

Also, an additional (remote) circuit breaker 16a is provided between the shunt 12 and the load 13 at the remote end of the transmission line 11 according to the preferred embodiment (figure 1). For sake of clarity, the additional circuit breaker 16a at the remote end of transmission line 11 is denoted as second circuit breaker 16a.

For example, in an initial condition, both breakers 16, 16a are in their respective conductive position C (closed position) and electrical power can be provided to the load 13. Both circuit breakers 16, 16a can be switched into the non-conductive position N (open position) together, for example in case of fault on the transmission line 14. The first circuit breaker 16 can then be switched back in the conductive position C position according to the method of the present invention, while second circuit breaker 16a stays in its non-conductive position N. After first circuit breaker 16 has been switched into the conductive position C, the second circuit breaker can be switched into the conductive position C as well, preferably after some delay.

The switching position of first circuit breaker 16 and can be controlled by means of a control unit 17. The second circuit breaker 16a is controlled by any appropriate control device 17a separate from control unit 17 and located remote from control unit 17. The control unit 17 is configured to control an actuator of first circuit breaker 16 in any known manner in order to switch the circuit breaker between the conductive position C and the non-conductive position N in both switching directions Similarly, control device 17a can be configured to control an actuator of second circuit breaker 16a for its switching as appropriate.

The circuit breakers 16, 16a may be any known circuit breaker suitable for establishing and interrupting an electrical connection between the supply line 14 and the transmission line 11 and the transmission line 14 and the load 13 respectively, as known in the art. For example, the circuit breakers 16, 16a may be self-blast circuit breakers.

At least one of the contacts of the first circuit breaker 16 is a movable contact that can be moved to switch first circuit breaker 16 between the conductive position C and the non-conductive position N and vice versa. One of the contacts of first circuit breaker 16 may be immovably arranged in a circuit breaker housing. It is also possible that both contacts are movably arranged in a circuit breaker housing. In general, first circuit breaker 16 may be any suitable circuit breaker appropriate and known for interrupting and establishing an electrical connection between supply line 14 and transmission line 11.

According to the preferred embodiment, a first voltage sensor 18 is provided that is configured to measure an actual voltage UA between the transmission line 11 and ground GND at first circuit breaker 16. In addition, a second voltage sensor 19 is provided to measure the supply voltage US between the supply line 14 and ground GND at the first circuit breaker 16. The voltage difference between the supply voltage US and the actual voltage UA corresponds to the circuit breaker voltage UC across first circuit breaker 16.

The sensor values of the first voltage sensor 18 and the second voltage sensor 19 are provided to the control unit 17. The control unit 17 is configured to use the sensor values characterizing the actual voltage UA and the supply voltage US to determine and particularly calculate additional electrical parameters or variables, such as an actual current IA flowing from the transmission line through the shunt 12 to ground. Thereby any suitable characteristic or parameter of an electrical variable may be determined, such as at least one of: an amplitude, a frequency, a damping factor, a beat frequency, a beat period, a phase between two electrical parameters (for example, between two voltages, between two currents or between a current and a voltage).

It has to be noted that the circuit breaker current IC and the actual current IA flowing through the shunt 12 may be different from one another due to the electrical characteristics of transmission line 11 (e.g. stray capacitance C_{TL}, inductance L_{TL} and ohmic resistance R_{TL} of transmission line 11) as schematically shown in figure 1 and generally known in this technical field.

In figure 2 a *"current zero missing phenomenon"* is schematically illustrated. The circuit breaker current IC flowing through the first circuit breaker 16 and further into transmission line 11 is illustrated by way of example after a non-optimal closing point in time tc at which first circuit breaker 16 is switched from its non-conductive position N into the conductive position C. This phenomenon results particularly from transient effects that are created when the actual current IA from the transmission line 11 through shunt 12 and the predicted current on the supply line side have different amounts at the closing point in time. Particularly, due to the shunt impedance and the electrical characteristics of the transmission line 11 (e.g. stray capacitance, impedance), upon switching first circuit breaker 16 and second circuit breaker 16a into the non-conductive position N respectively, electrical energy is stored and produces an alternating actual current IA that can be different from the predicted current on the supply line side, because of the electrical power (supply voltage US, supply current IS) provided by power source 15 on the supply line side of first circuit breaker 16. Thus, transients may result from forcing actual current IA on the transmission line side to change suddenly. The resulting alternating circuit breaker current IC has a DC component IC_{DC} that is different from zero and decays slowly after the closing point in time tc in case of a non-optimum closing point in time tc. Starting with the closing point in time tc or shortly thereafter, a time phase P exists during which the circuit breaker current IC is always different from zero. As exemplarily illustrated in figure 2, this time phase P ends at a zero-crossing point in time tz. The time phase P at least depends on the shunt impedance ZS and increases with increasing reactive component L and/or capacitive component compared to the ohmic component R of shunt impedance ZS (e.g. time constant of IC_{DC}: τ=L/R). For example, the time phase P may be in a range between one or more tens or hundreds of milliseconds.

When during this time phase P opening of first circuit breaker 16 (i.e. switching the circuit breaker 16 from the conductive position C into the non-conductive position N) is requested, the *"current zero missing phenomenon"* during the time phase P is an issue, because undesired transient effects can occur on the transmission line 11 at the point in time where the first circuit breaker 16 interrupts the electrical connection between the transmission line 11 and the supply line 14. The first circuit breaker 16 may fail to interrupt the current due to missing current zero crossing.

Another aspect is to preferably establish the electrical connection between supply line 14 and transmission line 11 at a point in time where the circuit breaker voltage UC is as low as possible for reducing the electrical arc creation between the electrical contacts of first circuit breaker 16 and in order to minimize a voltage step enforced onto transmission line 11.

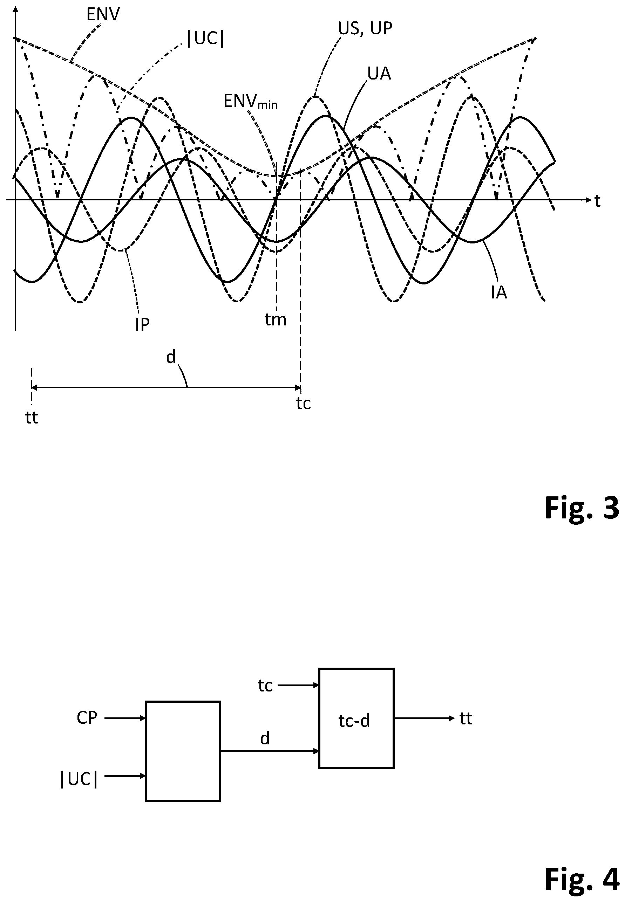

In order to address these issues, an optimized switching is provided by means of the present invention. The optimized switching is explained in the following based on figures 3 to 5.

In figure 3 a time period after switching of first and second circuit breaker 16, 16a into the non-conductive position N respectively is schematically illustrated by way of example. Figure 3 shows different electrical variables over time t. Particularly, the time-dependent progress of the actual voltage UA, the actual current IA, the supply voltage US, the absolute value of the circuit breaker voltage UC, a predicted current IP and a voltage envelope ENV are disclosed by way of example. As already mentioned above, the actual voltage UA and the supply voltage US can be measured using the voltage sensors 18 and 19, or it can be determined in any other appropriate manner, alternatively.

In the non-conductive position N of first circuit breaker 16, in case the first circuit breaker 16 is requested to be switched back into its conductive position C (e.g. after a predetermined time period after it has been switched into the non-conductive position), a predicted current IP is determined, which characterizes a current flowing through the shunt 12 after the first circuit breaker 16 has established the electrical connection between supply line 14 and transmission line 11. In the present example, the predicted current IP is determined based on a predicted voltage UP occurring on the transmission line 11 after first circuit breaker 16 establishes the electrical connection between supply line 14 and transmission line 11 and thus the shunt impedance ZS.

According to the embodiment, the predicted voltage UP is determined based on the supply voltage US because the supply voltage US is impressed to the transmission line 11 at the point in time where the electrical connection between supply line 14 and transmission line 11 is established when closing first circuit breaker 16. Particularly, the predicted current IP can be calculated as follows: $IP = \frac{UP}{ZS} = \frac{US}{ZS}$ (1)

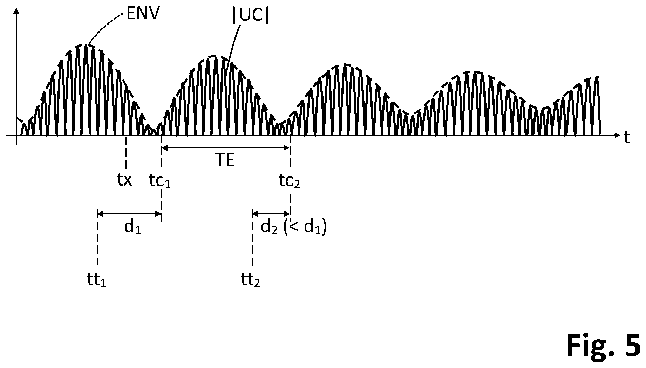

The circuit breaker voltage UC and thus also the absolute value thereof results from the difference between the supply voltage US and the actual voltage UA. The voltage envelope ENV is an envelope of the circuit breaker voltage UC or the absolute value of the circuit breaker voltage UC, as illustrated in the example according to fig-ure 3. For the envelope calculation any known mathematical method can be used. From the circuit breaker voltage UC or the absolute value thereof, also a beat frequency or beat period can be determined that corresponds to an envelope period TE, as apparent from figure 5.

From figures 3 and 5 it is apparent that the voltage envelope ENV has local minimums ENVₘᵢₙ, the distance between two subsequent local minimums ENVₘᵢₙ corresponds to the envelope period TE. A point in time where a local minimum of the voltage envelope ENV occurs is denoted as envelope minimum point in time tm that can be determined from the voltage envelope ENV.

Depending on at least one of the envelope minimum points in time tm, a closing point in time tc is determined according to the invention. The closing point in time tc is the point in time where first circuit breaker 16 establishes the electrical connection between its contacts during the switching movement from the non-conductive position N into the conductive position C. The closing point in time tc is not necessarily the point in time where the contacts of first circuit breaker 16 are in mechanical contact and/or reach the final relative position, but can be an earlier point in time, because of creation of an electrical arc between the circuit breaker contacts prior to getting in mechanical contact. This closing point in time tc is determined as a point in time prior to or following the envelope minimum point in time tm where the actual current IA and the predicted current IP are equal. In addition or as an alternative, where the voltage envelope ENV and the circuit breaker voltage UC are equal at the closing point in time tc.

In other words, the closing point in time tc corresponds to the crossing location of the actual current IA and the predicted current IP subsequent to the envelope minimum point in time tm, as illustrated in figure 3. Preferably, the closing point in time tc is the first crossing point of the predicted current IP and the actual current IA before or after the envelope minimum point in time tm, because there the absolute value of the circuit breaker voltage UC is close to the value at the local minimum ENVₘᵢₙ (occurring at the envelope minimum point in time tm).

This means that the closing point in time tc is determined according to the invention as optimized point in time for avoiding transient effects and reducing the circuit breaker voltage UC at the closing point in time tc to a small amount.

As also apparent from figure 3, a time delay d may occur between a trigger point in time tt and the closing point in time tc, due to the switching behavior or switching characteristics of first circuit breaker 16. Particularly, the time delay d depends on at least one circuit breaker parameter CP, which can comprise at least one of: the switching speed of the circuit breaker contacts when switching the first circuit breaker 16 from the non-conductive position N into the conductive position C and a rate of decrease of dielectric strength (RDDS). The switching speed is characteristic for the duration needed from the triggering point in time to move the contacts of first circuit breaker 16 into an electrically conducting position. It has to be noted that the time delay d and the trigger point in time tt in figure 3 are only schematically illustrated and the time delay d may deviate from the schematic illustration. For example, time delay d may be in range of approximately 50-100 ms.

As schematically illustrated in figure 4, the control unit 17 may be configured to calculate the time delay d based on at least one circuit breaker parameter CP, and in addition, based on the absolute value of the circuit breaker voltage UC (figure 4). During switching of the circuit breaker into the conductive position C, the distance of the circuit breaker contacts is reduced, whereby the decrease of this distance depends on the movement speed or switching speed of the circuit breaker contacts relative to one another. Depending on the absolute value of the circuit breaker voltage UC, preventing creation of an electrical arc creation between the circuit breaker contacts requires a minimum distance between the circuit breaker contacts. In other words, the higher the absolute value of the circuit breaker voltage UC, the longer the required distance for inhibiting electrical arc creation. Thus, the time delay d does not only depend on the characteristics of the first circuit breaker 16, but also on the absolute value of the circuit breaker voltage UC.

If the establishment of an electrical connection between supply line 14 and transmission line 11 is desired at the closing point in time tc, a trigger point in time tt can be calculated depending on the time delay d as follows: $tt = tc - d$ (2) The calculation illustrated schematically by means of the block diagram according to figure 4 can be carried out in the control unit 17.

Referring back to figure 3, the switching of first circuit breaker 16 from the non-conductive position N into the conductive position C is triggered at the trigger point in time tt, so that actually the electrical connection between supply line 14 and transmission line 11 is established at the closing point in time tc where the predicted current IP and the actual current IA are equal and thus transient effects are eliminated or at least reduced.

However, depending on the point in time where the request to close first circuit breaker 16 occurs, the next local minimum ENVₘᵢₙ of the voltage envelope ENV and thus the next closing point in time tc may be too close to the current point in time in view of the time delay d that closing of the first circuit breaker 16 may not be carried out in time. Such a situation is schematically illustrated in figure 5. It is assumed that at the current point in time tx, a request for closing first circuit breaker 16 occurs. The next possible closing point in time (i.e. the first closing point in time tc₁) is too close to the current point in time tx in view of the involved first time delay d₁, so that a first trigger point in time tt₁ is outside the available time window between the actual point in time tx and the first closing point in time tc₁. Therefore, the establishment of an electrical connection between supply line 14 and transmission line 11 at a first closing point in time tc₁ is not possible.

For this reason, the other possible closing point in time, denoted as second closing point in time tc₂, is calculated based on the envelope period TE. The second closing point in time tc₂ is the point in time corresponding to the first closing point in time tc₁ plus the envelope period TE: ${tc}_{2} = {tc}_{1} + TE$ (3)

From this second closing point in time tc₂ and depending on the associated second time delay d₂, a second trigger point in time tt₂ can be determined. As illustrated in figure 5, this second trigger point in time tt₂ is in the available time window between the current point in time tx and the second closing point in time tc₂, so that appropriate switching of the first circuit breaker 16 into the conductive position C can be initiated at the second trigger point in time tt₂.

As also schematically illustrated in figure 5, due to the increased absolute value of the circuit breaker voltage UC before and after a local minimum ENVₘᵢₙ of the voltage envelope ENV, it is desired to initiate switching before and/or following a local minimum ENVₘᵢₙ of the voltage envelope ENV, where the absolute value of the circuit breaker voltage UC is as small as possible to reduce stress of first circuit breaker 16 because of the electrical arc creation and in order to minimize a voltage step enforced onto transmission line 11.

The invention relates to a method and system 10 for operating, particularly closing or reclosing, a circuit breaker 16 (denoted as first circuit breaker 16 for sake of clarity) connected to a shunt compensated transmission line 11. The first circuit breaker 16 can be switched between a non-conductive position N and a conductive position C. With the first circuit breaker 16 being in the non-conductive (open) position N, a request for closing first circuit breaker 16 again can occur and in this case, the following method is carried out: an actual current IA flowing shunt 12 and a predicted current IP are determined. The predicted current IP is a current that flows in the transmission line 11 under the assumption that first circuit breaker 16 establishes an electrical connection when switching into the conductive position C. A circuit breaker voltage UC across first circuit breaker 16 and particularly the absolute value thereof defines a voltage envelope ENV, a local minimum ENVₘᵢₙ of which can be determined occurring at an envelope minimum point in time tm. Prior to or following this envelope minimum point in time tm, a closing point in time tc is determined that is as close as possible to the envelope minimum point in time tm, wherein at the closing point in time tc, the actual current IA and the predicted current IP are equal. The first circuit breaker 16 can then be triggered so that it establishes an electrical connection at the closing point in time tc.

### List of Reference Signs:

- 10: system
- 11: transmission line
- 12: shunt
- 13: load
- 14: supply line
- 15: power source
- 16: first circuit breaker
- 16a: second circuit breaker
- 17: control unit
- 17a: control device
- 18: first voltage sensor
- 19: second voltage sensor

- C: conductive position
- CP: circuit breaker parameter
- d: time delay
- d₁: first time delay
- d₂: second time delay
- ENV: voltage envelope
- ENVₘᵢₙ: local minimum of voltage envelope
- GND: ground
- IA: actual current
- IC: circuit breaker current
- IC_{DC}: DC component of circuit breaker current
- IP: predicted current
- IS: supply current
- N: non-conductive position
- P: time phase
- UA: actual voltage
- UC: circuit breaker voltage
- UP: predicted voltage
- US: supply voltage
- t: time
- tc: closing point in time
- tc₁: first closing point in time
- tc₂: second closing point in time
- TE: envelope period
- tm: envelope minimum point in time
- tn: opening point in time
- tt: trigger point in time
- tt₁: first trigger point in time
- tt₂: second trigger point in time
- tx: current point in time
- tz: zero crossing point in time
- ZS: shunt impedance

## Claims

1. Method for operating a circuit breaker (16) connected to a shunt compensated transmission line (11), which is connected to ground (GND) via a shunt (12), the method comprising:
- determining an actual current (IA) flowing through the shunt (12), when the circuit breaker (16) is in a non-conductive position (N),
- determining a predicted current (IP) flowing through the shunt (12) under the assumption that the circuit breaker (16) is switched into a conductive position (C),
- determining a voltage envelope (ENV) depending on a circuit breaker voltage (UC) across the circuit breaker (16),
- determining an envelope minimum point in time (tm) where the voltage envelope (ENV) has a local minimum,
- determining a closing point in time (tc) where the actual current (IA) and the predicted current (IP) are equal and/or where the voltage envelope (ENV) and the circuit breaker voltage (UC) are equal, wherein the closing point in time (tc) is a point in time as close as possible to the envelope minimum point in time (tm),
- trigger the circuit breaker (16) so that it is switched into a conductive position (C) at the closing point in time (tc).

2. Method according to claim 1, wherein at the closing point in time (tc) the actual current (IA) and the predicted current (IP) are equal for the first time after the envelope minimum point in time (tm).

3. Method according to claim 1 or 2, wherein based on the closing point in time (tc) a trigger point in time (tt) is determined at which the circuit breaker (16) is triggered prior to the closing point in time (tc) based on a switching time delay (d) that is characteristic for circuit breaker (16).

4. Method according to claim 3, wherein the time delay (d) is determined based on at least one circuit breaker parameter (CP) that characterizes the switching behavior of the circuit breaker (16).

5. Method according to claim 4, wherein the at least one circuit breaker parameter (CP) comprises at least one of the rate of decrease of dielectric strength (RDDS) and the switching speed between the contacts of the circuit breaker (16).

6. Method according to any of the claims 3 to 5, wherein the trigger point in time (tt) is determined based and an integer multiple of the envelope period (TE) and the time delay (d).

7. Method according to any of the preceding claims,
wherein at least one of the actual current (IA) flowing through the shunt (12) and an actual voltage (UA) at the transmission line (11) is measured.

8. Method according to claim 7, wherein the actual current (IA) calculated based on the actual voltage (UA) and the shunt impedance (ZS) of the shunt (12).

9. Method according to any of the claim 7 or 8, wherein at least one of an amplitude, a frequency, a phase and a damping factor is determined for the actual voltage (UA).

10. Method according to any of the preceding claims, further comprising determination of a supply voltage (US) at a supply line (14) to which the circuit breaker (16) is connected.

11. Method according to claim 10, wherein the supply voltage (US) is measured.

12. Method according to any of the preceding claims,
wherein the predicted current (IP) is determined based on a predicted voltage (UP) and the shunt impedance (ZS) of the shunt (12).

13. Method according to claim 10 or 11 and according to claim 12, wherein the predicted voltage (UP) is determined based on the supply voltage (US).

14. Method according to any of the claims 9 to 13, wherein at least one of an amplitude, a frequency, a phase and a damping factor is determined at least for the actual voltage (UA).

15. System (10) comprising a shunt compensated transmission line (11), a shunt (12) connecting the transmission line (11) to ground (GND), a circuit breaker (16) connected to the transmission line (11) and a control unit (17) configured to control the circuit breaker (16), wherein the control unit (17) is configured to carry out the following steps:
- determining an actual current (IA) flowing through the shunt (12), when the circuit breaker (16) is in a non-conductive position (N),
- determining a predicted current (IP) flowing through the shunt (12) under the assumption that the circuit breaker (16) is switched into a conductive position (C),
- determining a voltage envelope (ENV) depending on a circuit breaker voltage (UC) across the circuit breaker (16),
- determining an envelope minimum point in time (tm) where the voltage envelope (ENV) has a local minimum,
- determining a closing point in time (tc) where the actual current (IA) and the predicted current (IP) are equal and/or where the voltage envelope (ENV) and the circuit breaker voltage (UC) are equal, wherein the closing point in time (tc) is a point in time as close as possible to the envelope minimum point in time (tm),
- trigger the circuit breaker (16) so that it is switched into a conductive position (C) at the closing point in time (tc).
